(19)

Europäisches
Patentamt

European
Patent Office

Office européen
des brevets

(11)  **EP 2 221 581 B1**

(12)  **EUROPEAN PATENT SPECIFICATION**

(45) Date of publication and mention
of the grant of the patent:
**19.07.2017  Bulletin 2017/29**

(51) Int Cl.:
***G01C 21/34*** *(2006.01)*

(21) Application number: **09002291.4**

(22) Date of filing: **18.02.2009**

(54) **Method of estimating a propulsion-related operating parameter**

Verfahren zur Schätzung eines antriebsbezogenen Betriebsparameters

Procédé d'évaluation d'un paramètre de fonction associé à la propulsion

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(43) Date of publication of application:
**25.08.2010  Bulletin 2010/34**

(73) Proprietor: **Harman Becker Automotive Systems
GmbH
76307 Karlsbad (DE)**

(72) Inventors:
• **Kluge, Sebastian
81669 München (DE)**
• **Pryakhin, Alexey
80689 München (DE)**
• **Kunath, Peter
80999 München (DE)**

(74) Representative: **Bertsch, Florian Oliver et al
Kraus & Weisert
Patentanwälte PartGmbB
Thomas-Wimmer-Ring 15
80539 München (DE)**

(56) References cited:
| WO-A-2007/061409 | DE-C1- 19 605 458 |
| JP-A- 2000 002 553 | JP-A- 2006 300 780 |
| JP-A- 2008 101 977 | JP-A- 2008 107 155 |
| US-A- 5 913 917 | US-A- 6 005 494 |
| US-A1- 2007 112 475 | US-A1- 2008 133 120 |

EP 2 221 581 B1

**Description**

Field of the invention

The present invention relates to a method of estimating a propulsion-related operating parameter of a vehicle for a road segment, and a method of calculating a route in a vehicle navigation system. The invention further relates to navigation systems, such as portable navigation systems or dashboard-mounted navigation systems.

Background

The determination of a route from a starting point to a destination in a vehicle navigation system often minimizes either driving distance or driving time. Yet with increasing costs for energy and under environmental considerations, the use of an energy-efficient route becomes more desirable. For the calculation of such a route, the energy consumption needs to be predicted for road segments of the route. Conventional navigation systems are either not capable of predicting an energy consumption for a given road segment or make rather inaccurate predictions.

US 2007/0112475 A1 discloses an advanced fuel control which controls the power applied to a vehicle engine in order to optimize the energy efficiency. The power management system uses external inputs to derive a velocity or speed that optimizes the applied power. External inputs include information on the road, such as incline, acceptable range of speeds, and vehicle specific properties, such as weight, performance of the engine, aerodynamic performance, and rolling resistance. The operational parameters considered in the determination of the optimal speed can be fixed or may be changed, e.g., using an equation or relationship that uses other information for input. A drivetrain efficiency model can be provided or can be measured from the power input versus power output of the drivetrain. The memory in which the operational parameters may be stored can also include information about an aerodynamic model, rolling resistance model, a drivetrain efficiency model, and the like.

One of the problems of predicting fuel consumption for a given route lies in the fact that the fuel consumption is vehicle-specific. The average fuel consumption of a vehicle varies strongly between different makes and models. Even for the same models the fuel consumption varies for different types of engines, different tires, different vehicle accessories, and the like. Further variations in fuel consumption result from the driving style of the driver, and from environmental conditions, such as the type of road the vehicle is traveling on.

As a result, it is at present impractical to make a prediction of fuel consumption in a vehicle navigation system. Complex models for vehicles exist, but they use a large number of fixed, vehicle-specific parameters. These parameters may not be available for all types of vehicles and may not be available to the provider of the vehicle navigation system. Due to their complexity and the extensive parameter space, such models are prohibitive for the use in portable or dashboard-mounted navigation systems. Further, if the navigation system is to be used in another vehicle, the predictions made by the system will no longer be valid. In consequence, the determination of an energy-efficient route with sufficient accuracy is not possible in conventional vehicle navigation systems.

Accordingly, there is a need for a method which enables an improved estimation of a propulsion-related operating parameter, such as fuel or energy consumption, or $CO_2$ emission, of a vehicle for a road segment, as well as for a vehicle navigation system which is capable of performing such an estimation. It is further desirable that such an estimation can be performed efficiently without requiring a large number of fixed vehicle-specific parameters, and without requiring extensive processing time and power. The estimation should further be flexible so as to account for changes of conditions, such as when the vehicle or the driver of the vehicle changes.

Summary of the invention

This need is met by the features of the independent claims. In the dependent claims, preferred embodiments of the invention are described.

According to a first aspect of the invention, a method of estimating a propulsion-related operating parameter of a vehicle for a road segment according to claim 1 is provided.

The at least one vehicle-specific parameter may thus be a characteristic property of the vehicle, and accordingly considering the vehicle-specific parameter may result in a precise estimation of the propulsion-related operating parameter for the road segment. No a priori information for the vehicle-specific parameter may be needed, as the vehicle-specific parameter is determined on the basis of data acquired during vehicle operation. Thus, the estimation of the propulsion-related operating parameter is very flexible, and a system implementing the method may be employed in different vehicles while it may still be capable of making precise predictions of the propulsion-related operating parameter. As the predetermined relationship may only comprise a limited number of vehicle-specific parameters, which can be determined while driving, no complex models requiring extensive parameter sets are needed.

According to an embodiment, the first operating parameter for the road segment is estimated as a function of time or distance with function values variable over the road segment. By not only considering an average value of the first operating parameter, the precision of the estimation of the propulsion-related operating parameter may be improved significantly. As an example, a road segment for which many acceleration and deceleration phases of the vehicle are required will lead to larger fuel consumption compared to a road segment of the same length on which a vehicle may travel at constant speed.

The first operating parameter may at least be one of a velocity of the vehicle estimated for the road segment and an acceleration of the vehicle estimated for the road segment, or any other parameter describing the movement/state of the vehicle. It should be clear that an acceleration may be negative and may thus also include a deceleration.

The information provided for the road segment may comprise at least one of a road segment type, a road segment class, a maximum velocity allowed for the road segment, an average velocity determined for the type of road segment, a target velocity for the road segment, a form parameter for the road segment, an incline of the road segment, and current traffic information for the road segment. Using one or a combination of these types of information for the road segment has the advantage that a more precise estimation of the first operating parameter of the vehicle may be achieved.

The estimation of the first operating parameter may further be based on a driving behavior determined for a driver of the vehicle. Even for drivers with different driving behaviors, a precise estimation of the first operating parameter and thus the propulsion-related operating parameter may be enabled.

A predetermined relationship between predetermined vehicle operating parameters may be provided for each of plural vehicle subsystem models. At least one vehicle-specific parameter may be determined for each subsystem model on the basis of said relationships, the determined vehicle-specific parameters being taken into account for estimating the propulsion-related operating parameter. The division into sub-systems may allow the use of simplified relationships between the vehicle operating parameters for which driving data is acquired, and may further enhance the precision of the estimation of the propulsion-related operating parameter. It may thus result in a more efficient computation requiring less processing power while delivering an enhanced estimation.

As an example, the vehicle sub-systems models may comprise at least one of a model for a wheel to motor coupling, a model for slippage during up-/downshift, a model for a torque required from a motor of the vehicle, and a model for idling.

The at least two vehicle operating parameters, for which driving data is acquired, may be selected from a group comprising velocity, acceleration, braking pressure, motor torque, motor rotation speed, engaged gear, fuel consumption, filling level of fuel tank, and driving status. By acquiring driving data for two or more of these operating parameters the at least one vehicle-specific parameter may be precisely determined without the need for a priori knowledge of vehicle specifics.

As an example the driving data for at least one of the at least two vehicle operating parameters may be obtained from an internal network of the vehicle on which sensor information for the operating parameter is provided. It may for example be obtained from a controller area network (CAN) of the vehicle.

The at least one vehicle-specific parameter may be proportional to at least one vehicle-specific property selected from a group comprising a transmission ratio, a rolling drag coefficient ($c_R$), an aerodynamic drag coefficient ($c_L$), a resistance against acceleration coefficient ($c_B$), a braking resistance coefficient, a braking fraction of deceleration, a clutch operating speed coefficient, a fuel consumption when idling, a motor rotation speed when idling, and an efficiency of a motor of the vehicle. By using one or a combination of these vehicle-specific parameters a precise estimation of the propulsion-related operating parameter may be achieved. Further, these vehicle-specific parameters may be determined "on line" from the driving data acquired during vehicle operation.

Each identified driving phase may for example be associated with a respective set of vehicle specific parameters which are determined from the respective driving data. Each set may comprise one or more predetermined vehicle specific parameters, wherein the same parameter may occur in different sets, and wherein the parameters are generally characteristic for the respective driving phase. The vehicle specific parameters may be used for the estimation of the propulsion related operating parameter irrespective of the driving phase for which they were determined. In that case, the distinction between driving phases may only occur when estimating the vehicle specific parameters, but not when estimating the propulsion related operating parameter.

In other embodiments, only some vehicle specific parameters may be used or they may be used in accordance with driving phases identified for said first operating parameter. As an example, the estimation of the propulsion-related operating parameter may comprise identifying different driving phases for a course of a function of said first operating parameter for the road segment. The at least one vehicle-specific parameter taken into account for the estimation of the propulsion-related operating parameter may then be selected in accordance with the respective driving phase. The propulsion-related operating parameter may for example separately be estimated for the identified driving phases. For each driving phase a suitable relationship and one or more corresponding vehicle-specific parameters may thus be used, which may improve the accuracy of the determination of the propulsion-related operating parameter. It should be clear that the same vehicle-specific parameter may also be considered for different driving phases.

As an example, the driving phases that may be identified comprise an idling phase, an acceleration phase, a constant driving phase, a planar drive phase, a driving with deceleration phase, and a driving with applied brakes phase. It should be clear that in the driving data for one road segment, only one driving phase or plural driving phases may be identified. As different vehicle-specific parameters may be decisive for the different driving phases, the propulsion-related operating parameter may be estimated more precisely by identifying the different phases in the estimation process.

As an example, the at least one vehicle-specific parameter may comprise a transmission ratio, the transmission ratio being determined by acquiring driving data for a velocity of the vehicle and a rotation speed of a motor of the vehicle over a predetermined driving distance for each available gear. The transmission ratio may then be calculated from the acquired driving data for each gear using a predetermined relationship and a statistical method.

As another example, the at least one vehicle-specific parameter may comprise a roll and drag parameter and an aerodynamic drag parameter, both being determined by acquiring driving data for a velocity of the vehicle and a torque produced by a motor of the vehicle over a predetermined driving distance while an acceleration of the vehicle is below a predetermined threshold. The roll and drag parameter and the aerodynamic drag parameter may be calculated from the acquired driving data using a predetermined relationship and a statistical method.

According to yet another example the at least one vehicle-specific parameter may further comprise a resistance against acceleration ($c_B$) parameter. Driving data for an acceleration of the vehicle may be further acquired or determined from the acquired velocity. The resistance to acceleration parameter may then be determined from the acquired driving data using a predetermined relationship, the determined rolling and aerodynamic drag parameters and a statistical method. Even further, the at least one vehicle-specific parameter may comprise a braking resistance parameter. Driving data may then be acquired for a braking pressure of brakes of the vehicle. The braking resistance parameter may then be determined from the acquired driving data using a predetermined relationship, the determined rolling and aerodynamic drag parameters, the determined resistance to acceleration parameter and a statistical method.

According to yet another example, the at least one vehicle-specific parameter may comprise an efficiency parameter proportional to a motor efficiency of the vehicle, the efficiency parameter being determined by acquiring driving data for a torque produced by a motor of the vehicle, a rotation speed of the motor of the vehicle and the fuel consumption of the vehicle over a predetermined driving distance. The efficiency parameter may be calculated from the acquired driving data using a predetermined relationship and a statistical method. It should be clear that the motor may be a combustion engine, an electrical engine, or any other type of engine used to propel the vehicle or to generate energy for propelling the vehicle, or a combination thereof.

The statistical parameter estimation procedure or the parameter optimization procedure, such as e.g. a least-mean-squares method, is capable of processing a large number of acquired driving data with relatively little computational effort, and may further enable a precise determination of the vehicle-specific parameter even if the driving data is strongly scattered.

Just as an example the estimation of the propulsion-related operating parameter may comprise the estimation of a rotation speed of a motor of the vehicle for the road segment on the basis of the first operating parameter, a first of the at least one vehicle-specific parameter and a corresponding relationship. A torque to be produced by a motor of the vehicle may be estimated for the road segment on the basis of the first operating parameter, at least a second of the at least one vehicle-specific parameter and a corresponding relationship. The propulsion-related operating parameter may then be estimated for the road segment from the estimated motor rotation speed, the estimated motor torque, at least a third of the at least one vehicle-specific parameter and a corresponding relationship. A simplified yet precise estimation of the propulsion-related operating parameter may thus be enabled.

In another embodiment, said first operating parameter is the velocity of the vehicle, and the estimation of the propulsion related operating parameter comprises the steps of estimating a sum of driving resistances of the vehicle for the road segment on the basis of the velocity estimated for the road segment, the at least one vehicle specific parameter and a corresponding relationship, and estimating the propulsion related operating parameter for the road segment from the estimated velocity, the estimated driving resistances, at least a second of the at least one vehicle specific parameter and a corresponding relationship.

The method may further comprise the assigning of a cost value corresponding to the estimated propulsion-related operating parameter to the road segment or to a class or type of the road segment. The cost value may be provided for further route calculation. A route comprising plural road segments may for example be calculated which minimizes the corresponding assigned cost values. As a result, an energy or fuel-efficient route or a route with minimal $CO_2$ emission may be obtained, resulting in reduced operating costs for the vehicle and less pollution of the environment.

According to another aspect of the invention, a method of calculating a route in a vehicle navigation system according to claim 14 is provided.

According to another aspect of the invention a method of calculating a route according to claim 15 in a vehicle navigation system is provided.

According to a further aspect of the invention a navigation system for a vehicle according to claim 16 is provided. According to an embodiment, the navigation system further comprises a database adapted to store the at least one vehicle specific parameter determined by the processing unit. The database may be further adapted to store a cost value corresponding to the determined propulsion related operating parameter in association with the road segment or in association with a type or a class of the road segment. Storing the vehicle specific parameter has the advantage that when new map data with new road segments becomes available, the propulsion related operating parameter can be estimated for the new map data on the basis of the vehicle specific parameter. Storing the cost values in association with corresponding road segments, or road segment types or classes, has the advantage that they may be retrieved for the calculation of a cost efficient route, e.g. minimizing energy or fuel consumption, or $CO_2$ emission.

The processing unit may further be adapted so as to perform one of the above-mentioned methods.

According to another aspect of the invention, a computer program product that can be loaded into the internal memory of a computing device is provided, the product comprising software code portions for performing one of the above-mentioned methods when the product is executed. Such a computer program product may for example be used with a vehicle navigation system. Further, an electronically readable data carrier with stored electronically readable control information is provided, the control information being configured such that when using the data carrier in a computer device, the control information performs one of the above-mentioned methods. The electronically readable data carrier may for example be used in a navigation system for a vehicle.

The above-mentioned methods may be automatically performed on any type of navigation system. The above-mentioned navigation system may be provided as dashboard-mounted vehicle navigation system, a handheld portable navigation device, or any other device capable of navigation, such as a mobile telephone, a personal digital assistant, and the like.

It is to be understood that the features mentioned above and those yet to be explained below can be used not only in the respective combinations indicated, but also in other combinations or in isolation without leaving the scope of the present invention.

Brief description of the drawings

The foregoing and other features and advantages of the invention will become further apparent from the following detailed description read in conjunction with the accompanying drawings. The detailed description and drawings are merely illustrative of the invention rather than limiting. In the drawings, like reference numerals refer to like elements.

Fig. 1 is a schematic block diagram illustrating the processing of data from different data sources according to an embodiment of the invention.

Fig. 2 schematically shows data sources in a vehicle comprising a navigation system according to an embodiment of the invention.

Fig. 3 is a schematic block diagram of a navigation system according to an embodiment of the invention.

Fig. 4 is a flow diagram illustrating a method according to an embodiment of the invention.

Fig. 5 is a flow diagram illustrating a method according to an embodiment of the invention, wherein a propulsion related operating parameter of a vehicle is estimated.

Fig. 6 is a flow diagram of a method according to an embodiment of the invention, wherein a route to a destination is determined.

Fig. 7 is a diagram showing driving data for the vehicle operating parameters 'velocity' and 'motor rotational speed'.

Fig. 8 is a diagram showing driving data acquired for the vehicle operating parameters 'velocity' and 'torque' produced by the motor of the vehicle.

Fig. 9 is a diagram showing driving data acquired for the vehicle operating parameters 'breaking pressure' and 'acceleration'.

Detailed description

It should be noted that the drawings are to be regarded as being schematic representations only, and elements in the drawings are not necessarily to scale with each other. Rather, the representation of the various elements is chosen such that their function and general purpose become apparent to a person skilled in the art.

It is also to be understood that in the following description of embodiments, any direct connection or coupling between functional blocks, devices, components, circuit elements or other physical or functional units shown in the drawings or described herein, i.e. any connection or coupling without intervening elements, could also be implemented by indirect connections or coupling, i.e. a connection or coupling with one or more additional intervening elements. Furthermore, it should be appreciated that the partitioning of embodiments in functional blocks or units shown in the drawings is not to be construed as indicating that these units necessarily are implemented as physically separate units, but functional blocks or units shown or described may be implemented as separate units, circuits, chips or circuit elements, but one or more functional blocks or units may as well be implemented in a common circuit, chip, circuit element or unit.

It is to be understood that the features of the various embodiments described hereinafter may be combined with each other unless specifically noted otherwise.

In the following, an embodiment of a navigation system 20 according to the invention will be described, followed by a description of methods which may be performed by such a navigation system. The navigation system of the present embodiment is adapted for determining a fuel or energy efficient route to a destination, or for determining a route with minimal $CO_2$ emission, which is roughly proportional to the fuel consumption for a vehicle with a combustion engine. Fuel consumption, energy consumption or carbon dioxide emission may be considered propulsion related operating parameters of the vehicle as these quantities characterize the operation of a motor propelling the vehicle. It should be clear that the present invention can be applied to navigation systems for all types of vehicles, such as vehicles propelled by a combustion engine, by an electrical motor, by hybrid drive (using a combination of combustion engine and electrical motor) or a fuel cell powered vehicle. While in the following, reference will be made to a vehicle powered by a combustion engine it should be noted that this explanation is clearly non-restrictive for the present invention and that navigation systems for any type of vehicle are covered by the present invention. Insofar as the following description refers to fuel consumption, it should be understood that all the explanations are equivalently applicable to any other propulsion related operating parameter of a vehicle, such as an energy consumption, e.g. electric energy, a carbon dioxide emission and the like.

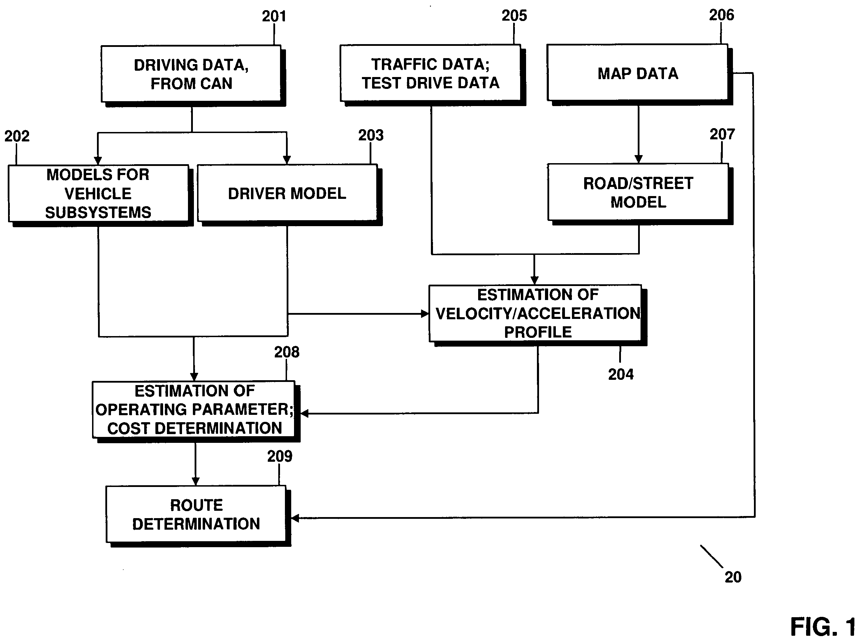

The navigation system of the present embodiment calculates a fuel (or energy) efficient route on the basis of cost values assigned to road segments comprised in map data. To achieve reliable and accurate results in the route determination, it is desirable that the costs assigned to the road segments reflect the fuel consumption for the road segment as precisely as possible. To achieve this, the navigation system of the present embodiment considers driving data acquired from a plurality of data sources for estimating the fuel consumption for a road segment. This is schematically illustrated in Fig. 1. Four factors which may influence the fuel consumption of the vehicle on a road segment are identified in the figure. One factor is the vehicle itself, which may have a certain aerial drag, a certain motor efficiency, a certain rolling drag and the like. Another factor is the driver of the vehicle, who may drive the vehicle fuel efficiently, e.g. by changing gears early, or who may operate the vehicle inefficiently. A further factor is traffic, as fuel consumption will increase in stop and go traffic, whereas it will settle at a lower value when the vehicle is travelling at constant speed. Another factor are properties of the road on which the vehicle is travelling, as fuel consumption may go up at high travelling speeds on a highway, or on steep and winding roads, whereas on straight roads with small incline and limited travelling speed, a moderate fuel consumption can be expected.

In the system of the present embodiment, driving data (201) for different operating parameters of the vehicle is acquired from a bus system of the vehicle, e.g. a control area network (CAN). Using different physical models for subsystems of the vehicle, vehicle specific parameters such as a transmission ratio, a rolling drag coefficient ($c_R$), an aerodynamic drag coefficient ($c_L$), a resistance to acceleration coefficient ($c_B$), a climbing resistance, and the like, can be determined from the acquired driving data (functional unit 202). By using a driver model (functional unit 203), driver specific parameters can be determined from the acquired driving data, such as a maximum or an average velocity, a velocity or a motor rotation speed at which the driver changes gears, and the like. Using these models and the determined vehicle or driver specific parameters, the fuel consumption for a given road segment can rather precisely be estimated, if the velocity profile with which the vehicle is expected to travel on the road segment is known.

The estimation of the velocity/acceleration profile is performed in functional unit 204, which receives traffic data, or other data such as data from test drives from data source 205. Data source 206 further provides map data, which comprises links and nodes reflecting a road network. These may further be analyzed by the road/street model 207, which may determine parameters characterizing a particular road segment comprised in the map data. The estimation of the velocity profile may further consider driver specific parameters delivered by driver model 203. As an example, the estimated velocity profile for a road segment can depend on the size of the road, the shape of the road, the incline of the road (delivered by unit 207), the current traffic situation on the road (delivered by unit 205) and the driving habits of the driver (delivered by unit 203). Thus, a rather precise estimation of the velocity profile for the road segment can be achieved by functional unit 204.

Based on the determined vehicle and driver specific parameters, a propulsion related operating parameter of the vehicle, such as the fuel consumption, can be estimated from the determined velocity profile in function unit 208. Unit 208 may for example use the models for the vehicle subsystems and the corresponding determined parameters, so that an accurate estimation can be achieved. The estimation can be performed for any road segment comprised in the map data, irrespective of whether the vehicle has been travelling on the road segment or not. The expected fuel consumption can be estimated for a number of road segments comprised in the map data individually, or it can be estimated for certain types or classes of road segments, which can be performed faster and requires less space for storing the estimated values. On the basis of the estimated fuel consumption, a cost value can be assigned to the road segment or to the type or class of road segment. As the velocity profile for the road segment is known, the time required for travelling the road segment may also be determined in unit 208, and a corresponding cost value may be assigned to the road segment.

Unit 209 performs a determination of a route to a destination, which may be entered by a user of the navigation system 20, wherein the determination is based on the map data and the assigned cost values. Besides travelling distance and required travelling time, the route determination may thus consider the fuel or energy consumption of the vehicle for a particular route. It should be clear that unit 209 may consider different cost factors for determining a route, which may be weighted differently, e.g. according to user preferences, or it may only minimize a particular type of cost values, such as cost values corresponding to fuel consumption.

As can be seen from the functional overview of navigation system 20 given in Fig. 1, the fuel consumption or other propulsion related operating parameters can be estimated for any given map data, even if navigation system 20 receives updated map data or map data for a new geographic region. The estimation can be performed as soon as enough driving data is collected for determining the vehicle or driver specific parameters used in the vehicle subsystem and driver models. Initially, i.e. before enough driving data is collected, default values may be used for these parameters. As the collection of driving data 201 can be performed continuously while the vehicle is operated, the accuracy of the system improves over time. Also, it can easily adapt to a new driver, or to a new vehicle.

Vehicle navigation system 20 may be a dashboard-mounted, i.e. fixed navigation system, or a portable navigation system. It may thus be used in different vehicles and by different drivers. Accordingly, parameters for vehicle and driver models may be stored and retrieved in accordance with the current driver and vehicle.

As all relevant parameters for the models can be obtained from e.g. vehicle sensors while the vehicle is operated, no specific and detailed information on the vehicle needs to be obtained. The system does not require the use of complex and detailed vehicle models. The fuel consumption can be predicted using only the information given on the road segments and the determined parameters. The navigation system 20 essentially models the dynamics of the vehicle in which it is installed, and can thus make a precise prediction of fuel consumption mainly based on road data. Of course, the total fuel amount required for a calculated route may also be determined.

It should be clear that many of the functional units shown in Fig. 1 are optional. For example, a driver model 203 as well as a road/street model 207 and traffic data 205 do not need to be used for estimating the propulsion related operating parameter and performing the route determination.

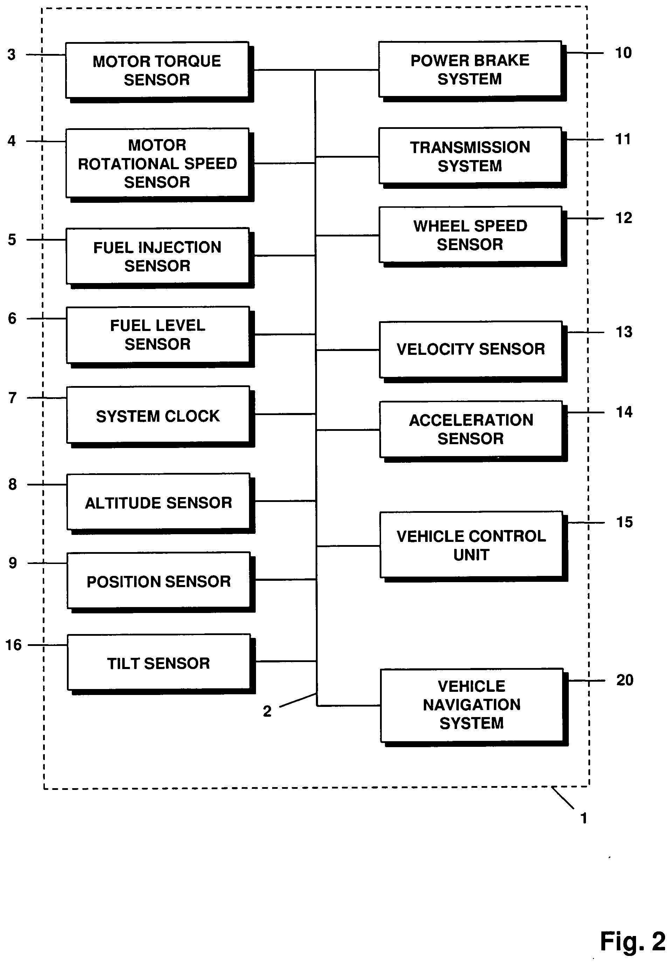

Fig. 2 schematically shows a vehicle 1 comprising a vehicle navigation system 20 interfacing a vehicle network 2, e.g. a controller area network (CAN). Network 2 may be interfaced by a wireless or a wired connection. A number of sensors and systems connected to the network 2 which are schematically shown in Fig. 2. From each of the sensors or systems, driving data for corresponding operating parameters may be acquired by the vehicle navigation system 20 via network 2. The data acquisition is performed while the vehicle is operated, i.e. while a motor of the vehicle is running, or while the vehicle is driving. Motor torque sensor 3 delivers the torque currently produced or applied by the motor of the vehicle. Motor rotational speed sensor 4 delivers the current rotational speed of the motor of the vehicle, e.g. the revolutions per minute (RPM). The fuel injection sensor 5 may deliver an amount of fuel injected into the motor of the vehicle, from which measurement a current fuel consumption may be determined. It should be clear that other sensors may be used for determining a current fuel consumption, such as a fuel flow sensor and the like. Further, fuel level sensor 6 is provided for determining the current filling level of the fuel tank of the vehicle. System clock 7 provides timing information which may be used for time dependent acquisition of driving data, whereas altitude sensor 8 provides the current altitude of the vehicle, e.g. pressure or GPS based, and position sensor 9 provides the current position of the vehicle, e.g. global positioning system (GPS) based. Tilt sensor 16 provides information on the tilt of the vehicle. A current braking pressure may be provided by the power brake system 10, information on the currently engaged gear may be provided by transmission system 11, whereas sensor 12 provides the current rotational speed of the wheels of the vehicle. In other systems, transmission system 11 may directly provide information on transmission ratios or on rotational speeds of the wheels of the vehicle.

Further sensors that may be provided and coupled to network 2 comprise the velocity sensor 13 providing a current velocity v(t) of the vehicle and an acceleration sensor 14 providing a current acceleration a(t) of the vehicle. It should be clear that most of these sensors shown in Fig. 2 are optional, as the corresponding operating parameters of the vehicle may be determined from other sensors and systems. As an example, if the diameter of the wheels of the vehicle is known, wheel speed sensor 12 may be used for determining the current vehicle velocity and acceleration on the basis of the current rotational speed or the change of the current rotational speed of the wheels of the vehicle, respectively. It should also be clear that the vehicle navigation system 20 may acquire only some of the operating parameters mentioned above, or may acquire further operating parameters from other vehicle systems, or even from data sources other than the network 2. As an example, navigation system 20 may only acquire vehicle velocity, current fuel consumption, and current motor rotational speed and torque. It should also be clear that network 2 may be any type of network or bus system, wired or wireless.

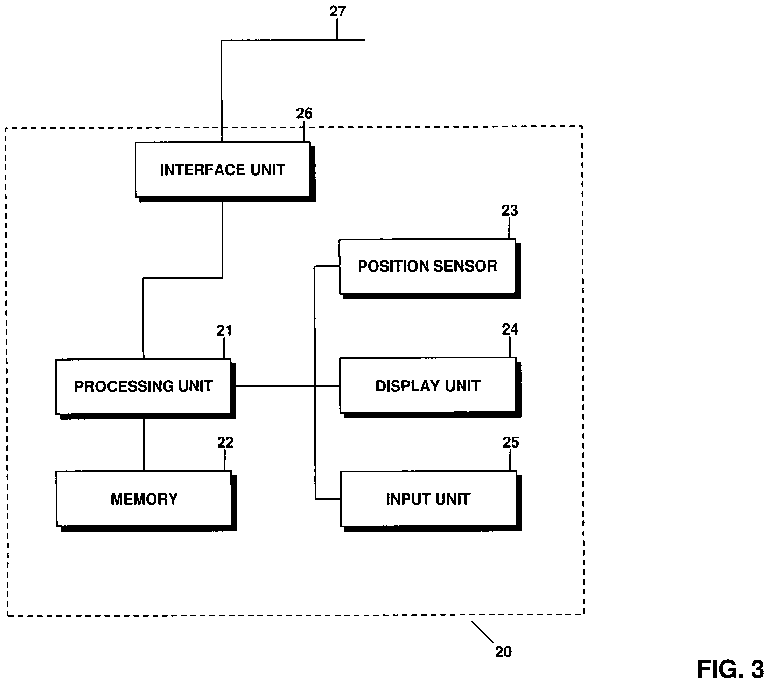

Fig. 3 shows the navigation system 20 of the present embodiment in more detail. Navigation system 20 is controlled by processing unit 21 according to control instructions e.g. in the form of software stored in memory 22. Processing unit 21 may be configured as a single processor, as multiple processors, or may include general purpose or special purpose microprocessors or digital signal processors. Memory 22 may comprise several types of memory, such as random access memory (RAM), read only memory (ROM) and other types of non-volatile memory, such as a flash memory, a hard drive and the like. Non-volatile memory may also include EPROM or EEPROM, and may be provided into the navigation device 20 or in removable form, such as a memory card, or in a combination thereof. Memory 22 may also include CD-ROM, DVD-ROM, or any other type of data carrier accessible by navigation system 20. Memory 22 may thus not only comprise control information for operating processing unit 21, but may also store map data and other information, and may provide storage space for a database in order to store the above-mentioned vehicle specific or driver specific parameters, acquired driving data, estimated operating parameters, determined cost values and the like. Memory 22 may also store models for vehicle subsystems, driver models and/or road/street models.

In accordance with the control instructions, processing unit 21 may acquire driving data via interface unit 26, and perform the determination of the vehicle and/or driver specific parameters. Processing unit 21 may implement the functional units described with respect to Fig. 1. As such, it may estimate a velocity/acceleration profile in accordance with map data and possibly traffic data, and perform an estimation of the propulsion related operating parameter, such as the fuel consumption, in accordance with the determined vehicle specific parameters. It may further perform a determination of corresponding cost values, and a route calculation taking into account the determined cost values.

Interface unit 26 interfaces network 2 of the vehicle 1 via a wired connection 27. It should be clear that interface unit 26 may also be configured as a wireless interface unit, which may comprise an antenna and may receive driving data over a wireless connection. Via interface unit 26, processing unit 21 is provided with data for a range of operating parameters of the vehicle, and is thus enabled to perform a precise estimation of the propulsion related operating parameter.

Processing unit 21 may further interface a position sensor 23, such as a GPS sensor, for determining a current position of navigation system 20, a display unit 24 for displaying information, such as a calculated route, to a user of navigation system 20, and input unit 25, via which the user may enter e.g. a destination, configuration parameters, and the like.

It should be clear that navigation system 20 may comprise further components common to navigation systems, such as an input/output unit for providing an interface between the processing unit and the other components, a microphone and a loudspeaker for receiving voice commands or giving out driving directions, and the like. Some of the units shown in Fig. 2 are optional, such as the position sensor 23, as position information may be obtained via the interface unit 26. Navigation system 20 may be a built-in navigation system mounted to a dashboard of a vehicle, wherein display unit 24 and input unit 25 may be provided at any location inside the vehicle, or it may have the form of a portable electronic device, such as a personal navigation system (PND), a mobile phone, a personal digital assistant, and the like.

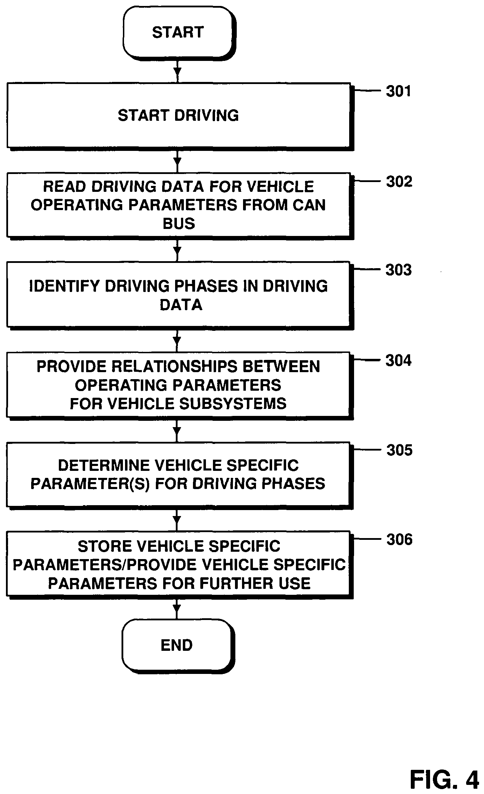

With respect to Figs. 4 to 6, methods which may be implemented on processing unit 21 will be described. The methods concern the determination of the vehicle specific parameters, the estimation of the propulsion related operating parameter, and associated cost values, and the determination of an efficient route with respect to the propulsion related operating parameter. The following description will again refer to the fuel consumption b(t) of the vehicle, although it can equally well be applied to other propulsion related operating parameters.

The total fuel consumed over a drive between two points in time t(a) and t(e) can be determined as:

$$B = \int_a^e \frac{1}{\eta_M \eta_K H_u} \left[ F_R(t) + F_B(t) + F_L(t) + F_S(t) \right] v(t) dt \qquad (1)$$

The integral is essentially the work performed by the vehicle, which depends on the frictional force for the rolling drag $F_R$, the inertial force $F_B$ resisting acceleration, the force resulting from aerodynamic drag of the vehicle $F_L$, and the climbing resistance Fs. The total fuel consumption B further depends on the motor efficiency $\eta_M$ and the transmission efficiency $\eta_K$, as well as the fuel value $H_u$ of the fuel used. The forces mentioned depend on the individual properties of the vehicle. According to the present embodiment, these parameters are determined on the basis of acquired driving data. The method also accounts for the fact that some of these parameters may depend on the individual driver of the vehicle, so that a precise determination of the fuel consumption can be performed for a particular driver.

Naturally, the value for $F_B$ depends on the acceleration a(t) of the vehicle, whereas the value $F_L$ is proportional to the square of the velocity v(t) of the vehicle. The climbing resistance Fs may be calculated, if the resolution of the map data regarding height differences is sufficiently precise, and may be used for the derivation of the total segment cost. Although the energy differences due to differences in height for two given routes starting at the same point and leading to the same destination is equal, the resulting energy consumption of driving along the different routes may vary due to different engine operation points or different dispersals of the inclinations. Another force which may be considered is a braking resistance Fv, as the actuation of the brake generally results in a loss of energy.

A person skilled in the art knows how the above-mentioned forces can be calculated based on vehicle parameters, and accordingly, details will not be discussed here. Some dependencies will just shortly be mentioned. The inertial force comprises a fraction $\lambda$ due to a moment of inertia of rotating components of the vehicle. This parameter A will change in accordance with the currently engaged gear, which will be designated as k. Further, the efficiencies $\eta_M$ and $\eta_K$ may depend on the rotational speed of the engine and the current load, i.e. the currently produced torque.

The engaged gear changes the transmission ratio $I_K = n_M/n_R$, wherein $n_M$ is the rotational speed of the motor or engine of the vehicle, and $n_R$ is the rotational speed of the wheels of the vehicle. The engaged gear not only influences the efficiency of motor and transmission, but also the parameter $\lambda$, and accordingly the resistance against acceleration as well as the force experienced when decelerating or braking.

Generally, the forces mentioned above cannot individually be measured. Yet, when the vehicle is traveling, the engine of the vehicle produces a certain torque M(t), which is transferred by the transmission to the wheels of the vehicle and overcomes these forces, i.e. the engine produces a certain power P(t). The work performed by the vehicle and thus the fuel consumed by the vehicle can also be expressed as integral over the power P(t) produced by the engine. The power produced by the engine can then be expressed as

$$P(t) = M(t)n_M(t) \qquad (2)$$

This is advantageous as the torque M(t) and the rotational speed of the engine $n_M(t)$ can be obtained by the navigation system over the interface to the CAN-bus. Yet there are further effects which may influence the fuel consumption of the vehicle, such as the actuation of the brake pedal, the clutch, as well as other perturbations such as wind and incline. Further, there are internal frictional resistances in the vehicle, and due to auxiliary devices of the vehicle, such as light, heating and the like, an additional torque may be required from the engine to cover the additional energy demand. In the present embodiment, it is thus suggested to introduce an additional torque Mint, so that the power is calculated to

$$P(t) = (M(t) + M_{int})n_M(t) \qquad (3)$$

The total fuel consumption can then be calculated to

$$B = \frac{1}{\overline{\eta}_M \overline{\eta}_K H_u} \int_{t_a}^{t_e} (M(t) + M_{int})n_M(t)dt \qquad (4)$$

wherein mean efficiencies $\overline{\eta}_M, \overline{\eta}_K$ for the motor and the transmission of the vehicle are used. The present embodiment now calculates values for M(t) and $n_M(t)$ from values for the operating parameters gear k(t), velocity v(t), acceleration a(t) and braking pressure p(t), which can be estimated based on map data.

The above-mentioned forces depend on vehicle specific parameters, such as the vehicle weight, and aerodynamic drag coefficient $c_x$ of the vehicle, the air pressure p, a projected frontal area A of the vehicle and the like. As these parameters occur in certain products, they can generally not separately be calculated from driving data acquired for operating parameters. Thus, vehicle specific parameters which are proportional to the above-mentioned parameters or to products thereof are determined in the present embodiment. Further, the present embodiment suggests to perform a determination of these vehicle specific parameters for different driving phases. This can facilitate the parameter determination as only certain parameters are relevant for certain driving phases. The embodiment further suggests to divide the vehicle into certain subsystems, such as clutch, transmission, engine and consumption. The following driving phases may be used:

- Rest: The vehicle is resting, if a velocity v(t) = 0 is detected. This may of course be performed by using certain error margins or threshold values for the velocity, so that for values slightly different from 0, it may also be determined that the vehicle is at rest.

- Take off: The vehicle is starting to drive, when the velocity v(t) ≠ 0 is below a threshold value $v_{min}$(k) and above the threshold level of the "rest" phase.

- Constant drive: The vehicle is in the constant driving phase, when the current velocity exceeds the respective threshold value $v_{min}$(k), and the acceleration | a(t)| is below a certain threshold value $a_{min}$. It should be clear that the acceleration a may be negative, and may thus be a deceleration.

- Driving without applied brakes: The vehicle is driving without applied brakes, if the current velocity exceeds the respective threshold value $v_{min}$(k) and no braking pressure p is detected, i.e. p(t) = 0. The vehicle may accelerate or decelerate, e.g. caused by an application of torque by the engine.

- Driving with applied brakes: The vehicle is driving with applied brakes if the current velocity exceeds the corresponding threshold value $v_{min}$ (k) and a braking pressure p(t) ≠ 0 is detected. An error margin may again be used for detecting a non-zero braking pressure.

- Driving in general: The vehicle is generally driving when the current velocity exceeds the threshold value $v_{min}$(k).

By analyzing driving data acquired from the CAN-bus, the processing unit of the navigation system 20 can determine in which driving phase the vehicle is operating. For each driving phase, different models for vehicle subsystems can then be used for determining vehicle specific parameters. This will be explained in detail with reference to Fig. 4.

The method of Fig. 4 may be performed by the vehicle navigation system 20 connected to the controller area network of the vehicle. In step 301, vehicle operation is started. The vehicle may be operated with the engine idling, or driving at constant speed or with acceleration/deceleration. While the vehicle is in operation, driving data for vehicle operating parameters is read from the CAN-bus in step 302. Any type of operating parameters available on the CAN-bus may be acquired, such as the operating parameters described with respect to Fig. 2, and in the present embodiment, at least the current gear, the current velocity, and the current braking pressure are acquired. Current acceleration may also be acquired or may be determined from the current velocity (e.g. as a derivative in time).

In the next step 303, driving phases are identified by analyzing the acquired driving data, as described above. Relationships between operating parameters for vehicle subsystems are provided in step 304, followed by a determination of the vehicle specific parameters for the different driving phases in step 305. In the following, the determination of the vehicle specific parameters based on the provided relationships will be described in detail.

The determination of the vehicle specific parameters aims at enabling a prediction of the fuel consumption solely based on a given velocity and/or acceleration profile. As the fuel consumption depends on the rotational speed of the motor $n_M$, this operating parameter needs to be determined. For each gear k of the vehicle, a vehicle specific parameter i can be defined for converting the velocity of the vehicle into the rotational speed of the motor:

$$n_M = iv \qquad (5)$$

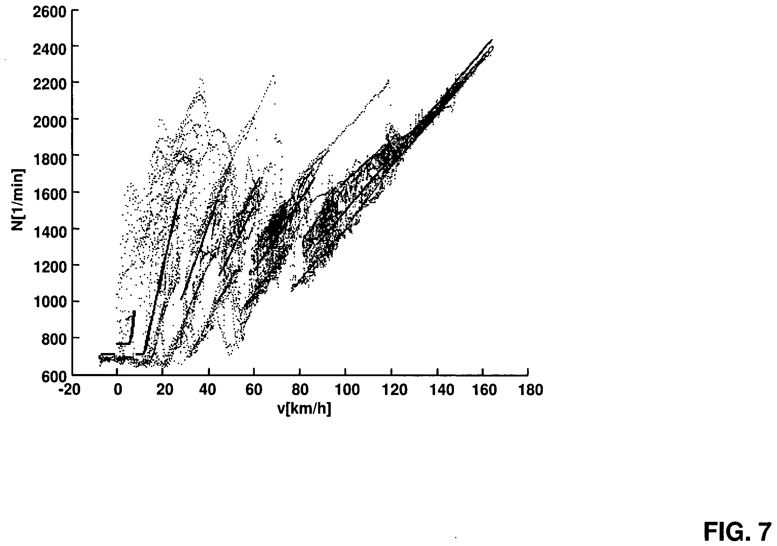

The vehicle specific constant i is proportional to the transmission ratio and can be determined for each gear k. The constant i(k) is determined by acquiring driving data for the velocity and the rotational speed of the motor, as shown in Fig. 7, and by using a statistical method, such as a least mean squares method using a linear regression. As slippage during an engagement of the clutch may influence the above relationship, the constant i(k) is determined during the "general driving" phase with the threshold value $v_{min}$(k) set high enough so that the operation of the clutch is already completed.

For the driving phase "rest", a vehicle specific parameter in form of a mean fuel consumption per time is determined. Particularly due to auxiliary devices running in the vehicle, the fuel consumption when idling is not negligible, and its consideration improves the estimation of the total fuel consumption. A current fuel consumption can be acquired from the CAN-bus and averaged over all consumption data acquired in the phase "rest".

Vehicle specific parameters for determination of the torque required from the motor of the vehicle are determined during the third, fourth and fifth of the above-mentioned driving phases. During the phase "constant driving", the present embodiment uses a relationship between the torque M(t) and the velocity v(t) of the form:

$$M(t) = \widetilde{c}_R + \widetilde{c}_L v(t)^2 \qquad (6)$$

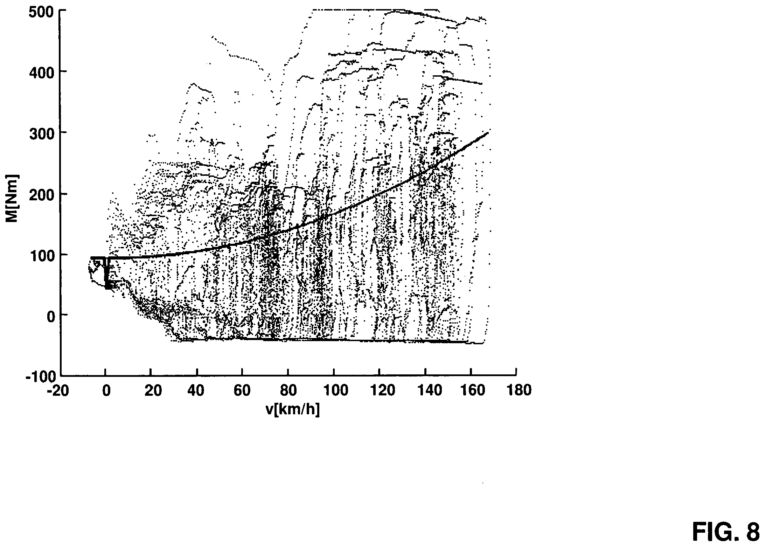

Thus, by acquiring driving data for M(t) and v(t), the vehicle specific constants $\widetilde{c}_R$ and $\widetilde{c}_L$ can be determined, which are proportional to the rolling drag coefficient and the aerodynamic drag coefficient of the vehicle, respectively. An example of such driving data and a curve corresponding to the relationship fitted to the driving data are shown in Fig. 8. The determination of the parameters from the regression equation using a least mean squares method enables the prediction of a motor torque from a given velocity profile.

Based on the coefficients $\tilde{c}_R$ and $\tilde{c}_L$, a coefficient $\tilde{c}_B$ which is proportional to a resistance against acceleration coefficient can be determined during the phase "driving without applied brakes". In this driving phase, the acceleration or deceleration of the vehicle a(t) is considered, and the relationship

$$M(t) = \tilde{c}_R + \tilde{c}_B(k)a(t) + \tilde{c}_L v(t)^2 \qquad (7)$$

is used. As the vehicle specific parameter $\tilde{c}_B$ depends on the gear in which the vehicle is operated, it is determined for each gear separately. For the determination, driving data for v(t) and M(t) for each gear, for which the absolute value of the acceleration exceeds the threshold determined for the driving phase may be used. The data obtained from the CAN network may thus be split up and a determination of $\tilde{c}_B$ may be performed for each data set using a least mean squares method.

In the braking phase, the vehicle is additionally decelerated by an application of the brakes. The additional deceleration may be described by $\Delta a(t) = \tilde{\vartheta}p(t)$, wherein the factor $\tilde{\vartheta}$ does generally not depend on the currently engaged gear. The motor torque during the braking phase can thus be described as

$$M(t) = \tilde{c}_R + \tilde{c}_B(k)[a(t) + \tilde{\vartheta}p(t)] + \tilde{c}_L v(t)^2 \qquad (8)$$

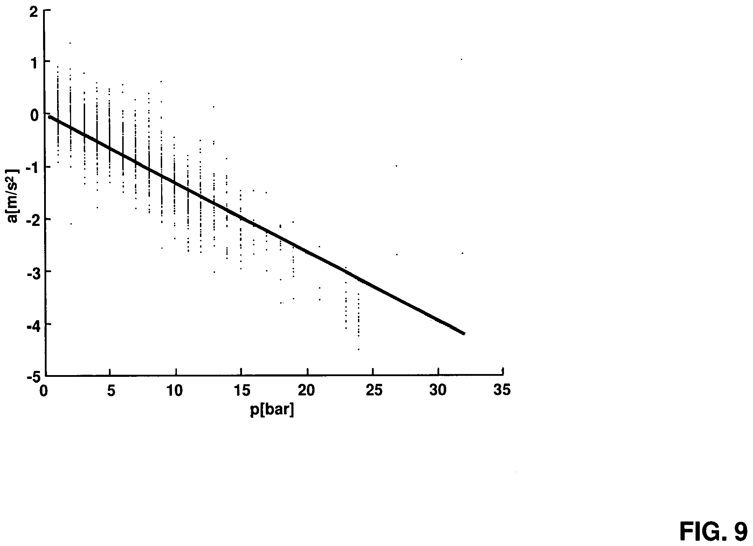

As the parameters $\tilde{c}_R$, $\tilde{c}_B$ and $\tilde{c}_L$ were previously determined, the parameter $\tilde{\vartheta}$ can be determined from the driving data acquired during braking phases, i.e. when the braking pressure p(t) > 0. Needless to say that the determination of $\tilde{\vartheta}$ may again be performed by a statistical method such as a least mean squares method. An example of driving data for the braking pressure p and the resulting acceleration a is shown in Fig. 9, wherein the parameter $\tilde{\vartheta}$ is proportional to the slope of the fitted line shown in the figure.

The driving phase "take off" considers the operation of the clutch of the vehicle. If the vehicle is for example decelerated while in gear k, the driver will operate the clutch when the vehicle speed drops below the threshold value of $v_{min}(k)$, in order to prevent a dying of the engine. If the clutch is operated, the engine generally idles with a predetermined minimal rotational speed, which can be determined as the minimum rotational speed of the engine acquired from the CAN-bus. The threshold value of the velocity can then be determined to

$$v_{min}(k) = \frac{n_{M,min}}{i(k)} \qquad (9)$$

The parameter i(k) is again the above-determined parameter proportional to the transmission ratio for gear k. Yet below this threshold velocity, the vehicle is not always operated at the minimum rotational speed. If the vehicle is accelerated, high rotational speeds may occur, and some vehicles may even adapt the idling speed dynamically to the vehicle velocity. Accordingly, the mean rotational speed measured for the engine will be used in the determination of the fuel consumption. For determining the torque required from the engine in the "take off" phase, the relationship as described with respect to the braking phase (equation (8)) can be used.

As can be seen from the above, a range of vehicle specific parameters can be determined from the provided relationships and the driving data acquired for the given vehicle operating parameters. It should be clear that this is only an example of determining vehicle specific parameters, and that other relationships and other operating parameters may be considered, or fewer vehicle specific parameters may be determined. A resistance to climbing an incline of a road segment on which the vehicle is traveling may be considered in the "constant driving" phase. A corresponding vehicle specific parameter may then be determined in dependence on the incline. Further, the driving characteristics of the driver of the vehicle may be considered, such as at which engine rotation speed the driver changes gears.

In the present embodiment, a vehicle specific efficiency parameter and the additional required torque Mint are further determined from acquired driving data. For this purpose, equation (4) is evaluated using a formula for numerical integration of zeroth order, and for each time step j, the equation

$$b_j\left(t_j - t_{j-1}\right) = \frac{M_{int}}{\overline{\eta}_M \overline{\eta}_K H_u} n_j\left(t_j - t_{j-1}\right) + \frac{1}{\overline{\eta}_M \overline{\eta}_K H_u} n_j M_j\left(t_j - t_{j-1}\right) \qquad (10)$$

is obtained. The current fuel consumption b(t) can be obtained from the CAN-bus, as well as the current rotational speed n of the engine and the torque M applied by the engine. The vehicle specific parameters $x_1 = M_{int}/\overline{\eta}_M\overline{\eta}_K H_u$ and $x_2 = 1/\overline{\eta}_M\overline{\eta}_K H_u$ can be determined from a linear regression using a least mean squares method. One should note that for a high deceleration of the vehicle, a negative fuel consumption may be obtained. As this is not possible with conventional combustion engines, only positive values of the function M(t) + Mint may be used, whereas negative function values may be set to 0. For other types of motors, such as a hybrid drive or an electrical motor, a recharging of a battery is possible, and thus a negative fuel consumption.

Now coming back to Fig. 4, in the next step 306, the determined vehicle specific parameters are stored in the navigation system and may be provided for a further use, such as fuel consumption prediction and route determination. It should be clear that the acquired driving data may also be stored, and that the vehicle specific parameters may be determined based on the stored driving data. For this purpose a moving window approach may be used, wherein driving data acquired over a predetermined distance or a predetermined driving time is evaluated for determining the vehicle specific parameters. The acquired driving data may also be weighted, e.g. so that more recently acquired data is weighted higher. The collection of driving data during a two hour drive on different types of roads may be sufficient for a precise determination of the vehicle specific parameters. The determination of the coefficients is adaptive, so that the navigation system can be used in different vehicles, while the precision of the determined parameters improves with driving time or driving distance.

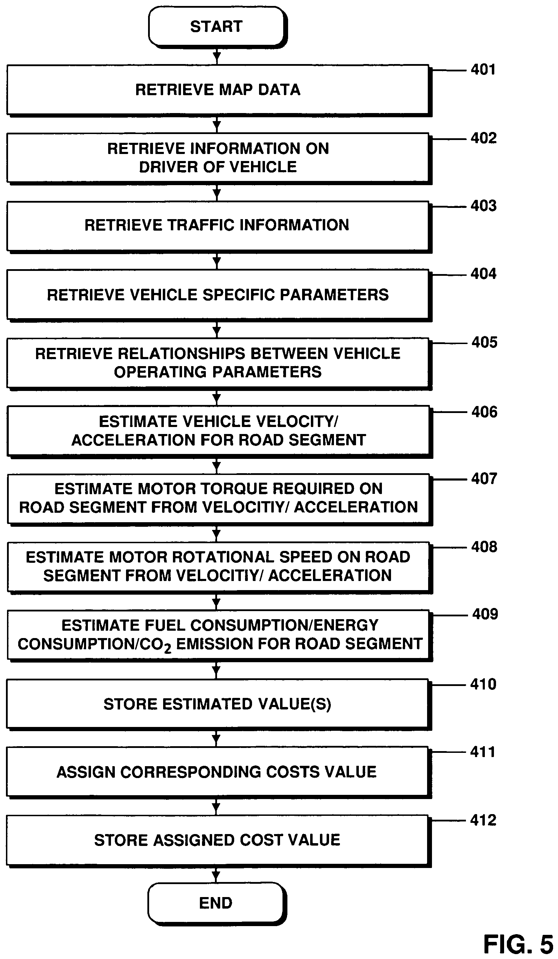

An estimation of the propulsion related operating parameter of the vehicle based on the determined vehicle specific parameters will be described with respect to Fig. 5. In a first step 401, map data, which may e.g. be stored in memory 22, is retrieved. In the next step 402, information on the driver of the vehicle is retrieved. This may include a travelling velocity preferred by the driver, information on how fast the driver accelerates the vehicle, and any other type of driver related information which may be used for estimating a velocity profile for a given road segment. In the next step 403, traffic information is retrieved. It may be retrieved from a data source such as a traffic message channel (TMC), TPEG (Transport Protocol Experts Group), VICS (Vehicle Information and Communication System) or other types of data sources, such as a mobile telephony network, floating car data and the like. The traffic information may be received for certain road segments comprised in the map data, e.g. within a predetermined distance from a current position of the vehicle.

In step 404, the vehicle specific parameters are retrieved/estimated. If these parameters were previously determined, they can be retrieved, e.g. from a memory, otherwise, they may be estimated as described above. Further, the relationships between the vehicle operating parameters are retrieved in step 405.

A velocity profile for a road segment is estimated in the next step 406. Estimation means that from the information available, a velocity profile is determined for the road segment. This will generally only approximate the velocity profile of the vehicle when the vehicle is actually travelling on the road segment. The estimation can for example consider the class of the road segment, e.g. whether it is a freeway, a highway or the like, the geometry of the road segment, i.e. whether it is straight or comprises a plurality of curves, as well as the traffic prevailing on the road segment and the individual driver characteristics. The estimation may also consider whether there are traffic lights located on the road segment, which may lead to an additional deceleration and acceleration, whether there is a maximum allowed velocity for the road segment and other similar information. By considering these different types of information, the velocity profile can rather accurately be estimated. As the velocity profile considers also acceleration and deceleration phases, and the velocity may vary considerably over the road segment, a more precise estimation of a fuel consumption for the road segment can be achieved as compared to the method which uses only a mean velocity for a road segment. A velocity profile may be estimated for each individual road segment, e.g. within a certain range, or may be only estimated for different classes or types of road segments. This has the advantage that the required processing power is largely reduced.

Based on the velocity profile for the road segment, the torque required from the motor of the vehicle can be estimated for the road segment in step 407. The torque may be estimated from the relationship according to one of equations (6), (7) or (8). The estimated velocity profile may for example be divided into different driving phases as described above, and the appropriate relationship for each driving phase together with the determined vehicle specific parameters may then be used for the torque determination. Similarly, the motor rotational speed is estimated from the velocity profile for the road segment in step 408. This may be performed for different engaged gears using the relationship of equation (5).

By making use of the vehicle specific parameters $x_1$ and $x_2$, the fuel consumption of the vehicle may then be estimated for the road segment using the relationship according to equation (4) (step 409). In other embodiments, an energy consumption, e.g. of an electrical motor, or a $CO_2$ emission may be estimated for the road segment. The fuel consumption can for example be estimated for different time steps, and then integrated over the velocity profile.

The values estimated for the fuel consumption may then be stored in step 410. Corresponding cost values are then assigned to the road segments or to the different road classes in step 411. A higher fuel consumption for a certain type of road segment may for example lead to a higher cost value. The cost values are then stored in step 412, e.g. in association with the road segments or the different types of road segments. They may for example be stored in a non volatile memory, such as a hard drive or flash memory, so that they can directly be accessed for a route calculation. They may also be dynamically updated, e.g. when traffic conditions change or when values of the determined vehicle specific parameters change.

It should be clear that not all the steps shown in Fig. 5 have to be performed. The estimation of the velocity profile may also be performed without making use of current traffic information, or the estimated fuel consumption may directly be assigned as a cost value to the road segment. The fuel consumption may be calculated as an average over the road segment. Further, a static traffic model may be used, e.g. using historic statistical information on a traffic volume for certain day times, days, or periods of the year for different road segments.

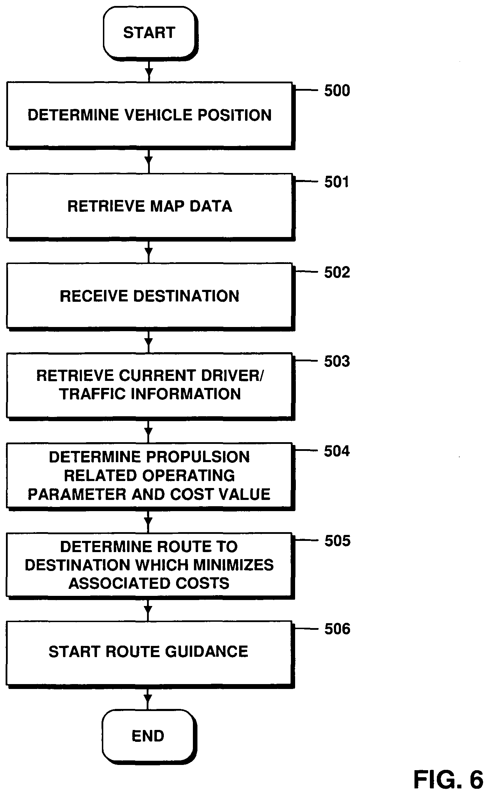

The vehicle navigation system 20 can then use the assigned cost values for a route determination as will be described with respect to Fig. 6. In a first step 500, the current position of the vehicle is determine, e.g. by a position or GPS sensor 9. Ni a next step 501, map data is retrieved by the navigation system, e.g. from memory 22. In step 502, a destination is received, e.g. by driver input. Further, current driver/traffic information is retrieved in step 503, and the propulsion related operating parameter, e.g. fuel consumption, and corresponding cost value is determined in step 504, e.g. by the method described with respect to Fig. 5. As the vehicle may be used by different drivers, retrieving current driver information has the advantage that a more precise estimation of the fuel consumption for a certain route can be made. The current driver may be determined by user input or by any method known in the art for the determining the identity of a current driver of a vehicle. Instead of the dynamic determination of the cost values according to steps 503 and 504, previously determined and stored cost values may be retrieved, e.g. from memory 22.

In step 505, a route from the current position to the destination is determined by the vehicle navigation system which minimizes the costs associated with the road segments of the route. The cost which is to be minimized can for example be determined by the driver. The route determination may for example consider cost relating to fuel consumption as well as time or any other cost criterion. Thus, not only the most fuel efficient route, the most energy efficient route or the route leading to the least $CO_2$ emission may be determined, but it is also possible to calculate routes which optimize a trade-off between various cost criteria. Route determination may be performed by any method known in the art, such as a Viterbi search algorithm, an A* algorithm and the like. These algorithms may be adapted for the use with dynamic traffic information. The algorithm searches for the route for which the costs associated with the road segments of the route are minimized.

Only one route may be determined, or a predetermined number of routes having the lowest total costs may be determined and may be provided to the driver for selection. In the next step 506, route guidance along the determined or the selected route is started. With the method of the present embodiment, the driver can thus be guided along the most fuel efficient route, as a result of which operating costs for the vehicle and the pollution of the environment are reduced.

While specific embodiments of the invention are disclosed herein, various changes and modifications can be made without departing from the scope of the invention. The present embodiments are to be considered in all respect as illustrative an non-restrictive, and all changes coming within the meaning and equivalency range of the appended claims are intended to be embraced therein.

**Claims**

**1.** A method of estimating a propulsion related operating parameter of a vehicle (1) for a road segment, the method being performed by a navigation device, the method comprising the steps of:

- estimating a given vehicle operating parameter for the road segment based on information provided for the road segment;
- acquiring driving data for vehicle operating parameters while the vehicle is in operation; identifying different driving phases in the driving data acquired for the vehicle operating parameters;
- for each one of the driving phases: determining a plurality of vehicle specific parameters based on a predetermined relationship between the vehicle operating parameters of a respective set of vehicle operating parameters and further based on the corresponding driving data, the predetermined relationship being indicative of the plurality of vehicle specific parameters,
- estimating the propulsion related operating parameter for the road segment on the basis of said estimated given vehicle operating parameter and the plurality of vehicle specific parameters,

wherein the propulsion related operating parameter is at least one of a fuel consumption, an energy consumption and a carbon dioxide ($CO_2$) emission,
wherein the plurality of vehicle specific parameters are determined using a statistical parameter estimation procedure or a parameter optimization procedure.

2. The method according to claim 1, wherein said given vehicle operating parameter for the road segment is estimated as a function of time or distance with function values variable over the road segment.

3. The method according to claims 1 or 2, wherein said given vehicle operating parameter is at least one of a velocity of the vehicle (1) estimated for the road segment and an acceleration of the vehicle (1) estimated for the road segment.

4. The method according to any of the preceding claims, wherein the information provided for the road segment comprises at least one of a road segment type, a road segment class, a maximum velocity allowed for the road segment, an average velocity determined for the type of road segment, a target velocity for the road segment, a form parameter for the road segment, an incline of the road segment, and current traffic information (205) for the road segment.

5. The method according to any of the preceding claims, wherein the estimation of said given vehicle operating parameter is further based on a driving behaviour (203) determined for a driver of the vehicle (1).

6. The method according to any of the preceding claims, wherein a predetermined relationship between predetermined vehicle operating parameters is provided for each of plural vehicle subsystem models (202), and wherein at least one vehicle specific parameter is determined for each subsystem model on the basis of said relationships, the determined vehicle specific parameters being taken into account for estimating the propulsion related operating parameter.

7. The method according to claim 6, wherein the vehicle subsystem models (202) comprise at least one of a model for a wheel to motor coupling, a model for slippage during up-/downshift, a model for a torque required from a motor of the vehicle, and a model for idling.

8. The method according to any of the preceding claims, wherein at least two vehicle operating parameters, for which driving data is acquired, are selected from a group comprising velocity, acceleration, braking pressure, motor torque, motor rotation speed, gear engaged, fuel consumption, filling level of fuel tank, and driving status.

9. The method according to any of the preceding claims, wherein at least some of the plurality of vehicle specific parameters are proportional to a vehicle specific property selected from a group comprising a transmission ratio, a rolling drag coefficient ($c_R$), an aerodynamic drag coefficient ($c_L$), a resistance against acceleration coefficient ($c_B$), a braking resistance coefficient, a braking fraction of deceleration, a clutch operating speed coefficient, a fuel consumption when idling, a motor rotation speed when idling, a climbing resistance and an efficiency of a motor of the vehicle.

10. The method according to any of the preceding claims, wherein the driving phases comprise at least one of an idling phase, an acceleration phase, a constant driving phase, a planar drive phase, a driving with deceleration phase, and a driving with applied brakes phase.

11. The method according to any of the preceding claims, wherein the estimation of the propulsion related operating parameter comprises the steps of:

- estimating a rotation speed of a motor of the vehicle for the road segment on the basis of said given vehicle operating parameter, a first of the plurality of vehicle specific parameters and a corresponding relationship,
- estimating a torque to be produced by the motor of the vehicle for the road segment on the basis of said given operating parameter, at least a second of the plurality of vehicle specific parameters and a corresponding relationship, and
- estimating the propulsion related operating parameter for the road segment from the estimated motor rotation speed, the estimated motor torque, at least a third of the plurality of vehicle specific parameters and a corresponding relationship.

12. The method according to any of the preceding claims, wherein said given vehicle operating parameter is the velocity of the vehicle, and wherein the estimation of the propulsion related operating parameter comprises the steps of:

- estimating a sum of driving resistances of the vehicle for the road segment on the basis of said velocity, at least a first of the plurality of vehicle specific parameters and a corresponding relationship, and
- estimating the propulsion related operating parameter for the road segment from the estimated velocity, the estimated driving resistances, at least a second of the plurality of vehicle specific parameters and a corresponding relationship.

13. The method according to any of the preceding claims, further comprising the step of assigning a cost value corresponding to the estimated propulsion related operating parameter to the road segment or to a class or type of the road segment, the cost value being provided for a further route calculation.

14. A method of calculating a route in a vehicle navigation system, comprising the steps of:

- retrieving road segments from a database of the navigation system, the road segments being associated with cost values corresponding to a propulsion related operating parameter determined according to the method of one of claims 1-13, the cost values being associated with individual road segments or with different types or classes of road segments,
- determining a route from a starting point to a destination taking into account the cost values corresponding to the propulsion related operating parameter.

15. A method of calculating a route in a vehicle navigation system, comprising the steps of:

- receiving current traffic information for predetermined road segments;
- performing an estimation of a propulsion related operating parameter for the predetermined road segments according to one of claims 1-13, the estimation taking the current traffic information into account; and
- determining a route to a destination taking into account costs corresponding to the propulsion related operating parameter estimated for the predetermined road segments.

16. A navigation system for a vehicle, comprising:

- an interface unit (26) providing an interface to a vehicle sensor system (1-14),
- a processing unit (21) adapted to estimate a propulsion related operating parameter of the vehicle for a road segment by estimating a given vehicle operating parameter for the road segment based on information provided for the road segment and estimating the propulsion related operating parameter for the road segment on the basis of said estimated given vehicle operating parameter, the estimation taking into account a plurality of vehicle specific parameter,

**characterized in that** the processing unit (21) is further adapted to determine the plurality of vehicle specific parameters by

- acquiring driving data for vehicle operating parameters via said interface unit while the vehicle (1) is in operation;
- identifying different driving phases in the driving data acquired for the vehicle operating parameters;
- for each one of the driving phases: determining the plurality of vehicle specific parameters based on a predetermined relationship between the vehicle operating parameters of a respective set of vehicle operating parameters and further based on the corresponding driving data, the predetermined relationship being indicative of the plurality of vehicle specific parameters,

wherein the propulsion related operating parameter is at least one of a fuel consumption, an energy consumption and a carbon dioxide ($CO_2$) emission,
wherein the plurality of vehicle specific parameters are determined using a statistical parameter estimation procedure or a parameter optimization procedure.

17. The navigation system according to claim 16, further comprising a database (22) adapted to store the plurality of vehicle specific parameters determined by the processing unit.

18. The navigation system according to claim 16 or 17, wherein the processing unit is adapted to perform the method according to one of claims 1-15.

19. A computer program product that can be loaded into the internal memory of a computing device, said product comprising software code portions for performing the method of one of claims 1-15 when the product is executed.

20. An electronically readable data carrier with stored electronically readable control information configured such that when using the data carrier in a computing device, the control information performs the method of one of claims 1-15.

**Patentansprüche**

1. Verfahren zum Schätzen eines antriebsbezogenen Betriebsparameters eines Fahrzeugs (1) für einen Straßenabschnitt, wobei das Verfahren durch eine Navigationsvorrichtung durchgeführt wird, wobei das Verfahren folgende Schritte umfasst:

- Schätzen eines gegebenen Fahrzeugbetriebsparameters für den Straßenabschnitt basierend auf Informationen, die für den Straßenabschnitt bereitgestellt werden;
- Erfassen von Fahrdaten für Fahrzeugbetriebsparameter, während das Fahrzeug in Betrieb ist; Identifizieren verschiedener Fahrphasen in den Fahrdaten, die für die Fahrzeugbetriebsparameter erfasst werden;
- für jede der Fahrphasen: Bestimmen einer Vielzahl von fahrzeugspezifischen Parametern basierend auf einer vorbestimmten Beziehung zwischen den Fahrzeugbetriebsparametern eines jeweiligen Satzes von Fahrzeugbetriebsparametern und ferner basierend auf den entsprechenden Fahrdaten, wobei die vorbestimmte Beziehung indikativ für die Vielzahl fahrzeugspezifischer Parameter ist,
- Schätzen des antriebsbezogenen Betriebsparameters für den Straßenabschnitt basierend auf dem geschätzten gegebenen Fahrzeugbetriebsparameter und der Vielzahl fahrzeugspezifischer Parameter,

wobei der antriebsbezogene Betriebsparameter mindestens eines von einem Kraftstoffverbrauch, einem Energieverbrauch und einer Kohlenstoffdioxidemission ($CO_2$-Emission) ist,
wobei die Vielzahl von fahrzeugspezifischen Parametern unter Verwendung eines statistischen Parameterschätzverfahrens oder eines Parameteroptimierungsverfahrens bestimmt wird.

2. Verfahren nach Anspruch 1, wobei der gegebene Fahrzeugbetriebsparameter für den Straßenabschnitt als eine Funktion von Zeit oder von Abstand mit Funktionswerten, die über dem Straßenabschnitt variabel sind, geschätzt wird.

3. Verfahren nach Anspruch 1 oder 2, wobei der gegebene Fahrzeugbetriebsparameter mindestens eines von einer Geschwindigkeit des Fahrzeugs (1), die für den Straßenabschnitt geschätzt wird, und einer Beschleunigung des Fahrzeugs (1), die für den Straßenabschnitt geschätzt wird, ist.

4. Verfahren nach einem der vorhergehenden Ansprüche, wobei die Informationen, die für den Straßenabschnitt bereitgestellt werden, mindestens eines von einem Straßenabschnittstyp, einer Straßenabschnittsklasse, einer maximalen Geschwindigkeit, die für den Straßenabschnitt zugelassen ist, einer durchschnittlichen Geschwindigkeit, die für den Typ des Straßenabschnitts bestimmt wird, einer Zielgeschwindigkeit für den Straßenabschnitt, einem Formparameter für den Straßenabschnitt, einer Neigung des Straßenabschnitts und aktuellen Verkehrsinformationen (205) für den Straßenabschnitt umfassen.

5. Verfahren nach einem der vorhergehenden Ansprüche, wobei die Schätzung des gegebenen Fahrzeugbetriebsparameters ferner auf einem Fahrverhalten (203) basiert, das für einen Fahrer des Fahrzeugs (1) bestimmt wird.

6. Verfahren nach einem der vorhergehenden Ansprüche, wobei eine vorbestimmte Beziehung zwischen vorbestimmten Fahrzeugbetriebsparametern für jedes von mehreren Fahrzeugsubsystemmodellen (202) bereitgestellt wird und wobei mindestens ein fahrzeugspezifischer Parameter basierend auf den Beziehungen für jedes Subsystemmodell bestimmt wird, wobei die bestimmten fahrzeugspezifischen Parameter zum Schätzen des antriebsbezogenen Betriebsparameters berücksichtigt werden.

7. Verfahren nach Anspruch 6, wobei die Fahrzeugsubsystemmodelle (202) mindestens eines von einem Modell für eine Rad-mit-Motor-Kopplung, einem Modell für Abrutschen während Hoch-/Herunterschalten, einem Modell für ein Drehmoment, das von einem Motor des Fahrzeugs erfordert ist, und einem Modell für Leerlauf umfassen.

8. Verfahren nach einem der vorhergehenden Ansprüche, wobei mindestens zwei Fahrzeugbetriebsparameter, für die Fahrdaten erfasst werden, aus einer Gruppe ausgewählt werden, die Geschwindigkeit, Beschleunigung, Bremsdruck, Motordrehmoment, Motordrehzahl, Getriebeeingriff, Kraftstoffverbrauch, Füllstand des Kraftstofftanks und Fahrzustand umfasst.

9. Verfahren nach einem der vorhergehenden Ansprüche, wobei mindestens einige der Vielzahl von fahrzeugspezifischen Parametern proportional zu einer fahrzeugspezifischen Eigenschaft sind, die aus einer Gruppe ausgewählt ist, die ein Übersetzungsverhältnis, einen Rollluftwiderstandskoeffizienten ($c_R$), einen aerodynamischen Luftwiderstandskoeffizienten ($C_L$), einen Koeffizienten des Widerstands gegen Beschleunigung ($C_B$), einen Bremswiderstandskoeffizienten, einen Bremsbruchteil der Verlangsamung, einen Kupplungsbetätigungsgeschwindigkeitskoeffizienten, einen Kraftstoffverbrauch im Leerlauf, eine Motordrehzahl im Leerlauf, einen Anstiegswiderstand und eine Effizienz eines Motors des Fahrzeugs umfasst.

10. Verfahren nach einem der vorhergehenden Ansprüche, wobei die Fahrphasen mindestens eines von einer Leerlaufphase, einer Beschleunigungsphase, einer konstanten Fahrphase, einer Planarantriebsphase, einer Fahrphase mit Verlangsamung und einer Fahrphase mit eingesetzten Bremsen umfassen.

11. Verfahren nach einem der vorhergehenden Ansprüche, wobei die Schätzung des antriebsbezogenen Betriebsparameters folgende Schritte umfasst:

- Schätzen einer Drehzahl eines Motors des Fahrzeugs für den Straßenabschnitt basierend auf dem gegebenen Fahrzeugbetriebsparameter, einer ersten der Vielzahl von fahrzeugspezifischen Parametern und einer entsprechenden Beziehung,
- Schätzen eines Drehmoments, das von dem Motor des Fahrzeugs für den Straßenabschnitt basierend auf dem gegebenen Betriebsparameter, mindestens einer zweiten der Vielzahl fahrzeugspezifischer Parameter und einer entsprechenden Beziehung zu erzeugen ist, und
- Schätzen des antriebsbezogenen Betriebsparameters für den Straßenabschnitt von der geschätzten Motordrehzahl, dem geschätzten Motordrehmoment, mindestens einer Dritten der Vielzahl fahrzeugspezifischer Parameter und einer entsprechenden Beziehung.

12. Verfahren nach einem der vorhergehenden Ansprüche, wobei der gegebene Fahrzeugbetriebsparameter die Geschwindigkeit des Fahrzeugs ist und wobei die Schätzung des antriebsbezogenen Betriebsparameters folgende Schritte umfasst:

- Schätzen einer Summe von Fahrwiderständen des Fahrzeugs für den Straßenabschnitt basierend auf der Geschwindigkeit, mindestens einer ersten der Vielzahl von fahrzeugspezifischen Parametern und einer entsprechenden Beziehung, und
- Schätzen des antriebsbezogenen Betriebsparameters für den Straßenabschnitt von der geschätzten Geschwindigkeit, den geschätzten Fahrwiderständen, mindestens einer zweiten der Vielzahl. von fahrzeugspezifischen Parametern und einer entsprechenden Beziehung.

13. Verfahren nach einem der vorhergehenden Ansprüche, ferner umfassend den Schritt des Zuweisens eines Kostenwerts entsprechend dem geschätzten antriebsbezogenen Betriebsparameter auf den Straßenabschnitt oder auf eine Klasse oder einen Typ des Straßenabschnitts, wobei der Kostenwert für eine weitere Routenberechnung bereitgestellt wird.

14. Verfahren zum Berechnen einer Route in einem Fahrzeugnavigationssystem, das folgende Schritte umfasst:

- Abrufen von Straßensegmenten von einer Datenbank des Navigationssystems, wobei die Straßenabschnitte Kostenwerten entsprechend einem antriebsbezogenen Betriebsparameter zugeordnet sind, der nach dem Verfahren von einem der Ansprüche 1-13 bestimmt wird, wobei die Kostenwerte individuellen Straßenabschnitten oder verschiedenen Typen oder Klassen von Straßenabschnitten zugeordnet sind,
- Bestimmen einer Route von einem Startpunkt zu einem Ziel unter Berücksichtigung der Kostenwerte entsprechend dem antriebsbezogenen Betriebsparameter.

15. Verfahren zum Berechnen einer Route in einem Fahrzeugnavigationssystem, das folgende Schritte umfasst:

- Empfangen aktueller Verkehrsinformationen für vorbestimmte Straßenabschnitte;
- Durchführen einer Schätzung eines antriebsbezogenen Betriebsparameters für die vorbestimmten Straßenabschnitte nach einem der Ansprüche 1-13, wobei die Schätzung die aktuellen Verkehrsinformationen berücksichtigt; und

- Bestimmen einer Route zu einem Ziel unter Berücksichtigung von Kosten entsprechend dem antriebsbezogenen Betriebsparameter, der für die vorbestimmten Straßenabschnitte geschätzt wird.

**16.** Navigationssystem für ein Fahrzeug, umfassend:

- eine Schnittstelleneinheit (26), die einem Fahrzeugsensorsystem (1-14) eine Schnittstelle bereitstellt,
- eine Verarbeitungseinheit (21), die angepasst ist, um einen antriebsbezogenen Betriebsparameter des Fahrzeugs für ein Straßensegment durch Schätzen eines gegebenen Fahrzeugbetriebsparameters für den Straßenabschnitt basierend auf Informationen, die für den Straßenabschnitt bereitgestellt werden, und Schätzen des antriebsbezogenen Betriebsparameters für den Straßenabschnitt basierend auf dem geschätzten gegebenen Fahrzeugbetriebsparameter zu schätzen, wobei die Schätzung eine Vielzahl von fahrzeugspezifischen Parametern berücksichtigt,

**dadurch gekennzeichnet, dass** die Verarbeitungseinheit (21) ferner angepasst ist, um die Vielzahl von fahrzeugspezifischen Parametern durch Folgendes zu bestimmen:

- Erfassen von Fahrdaten für Fahrzeugbetriebsparameter durch die Schnittstelleneinheit, während das Fahrzeug (1) in Betrieb ist;
- Identifizieren verschiedener Fahrphasen in den Fahrdaten, die für die Fahrzeugbetriebsparameter erfasst werden;
- für jede der Fahrphasen: Bestimmen der Vielzahl von fahrzeugspezifischen Parametern basierend auf einer vorbestimmten Beziehung zwischen den Fahrzeugbetriebsparametern eines jeweiligen Satzes von Fahrzeugbetriebsparametern und ferner basierend auf den entsprechenden Fahrdaten, wobei die vorbestimmte Beziehung indikativ für die Vielzahl von fahrzeugspezifischen Parametern ist,

wobei der antriebsbezogene Betriebsparameter mindestens eines von einem Kraftstoffverbrauch, einem Energieverbrauch und einer Kohlenstoffdioxidemission ($CO_2$-Emission) ist,

wobei die Vielzahl von fahrzeugspezifischen Parametern unter Verwendung eines statistischen Parameterschätzverfahrens oder eines Parameteroptimierungsverfahrens bestimmt wird.

**17.** Navigationssystem nach Anspruch 16, ferner umfassend eine Datenbank (22), die angepasst ist, um die Vielzahl von fahrzeugspezifischen Parametern zu speichern, die von der Verarbeitungseinheit bestimmt wird.

**18.** Navigationssystem nach Anspruch 16 oder 17, wobei die Verarbeitungseinheit angepasst ist, um das Verfahren nach einem der Ansprüche 1-15 durchzuführen.

**19.** Computerprogrammprodukt, das in den internen Speicher einer Rechenvorrichtung geladen werden kann, wobei das Produkt Softwarecodeabschnitte zum Durchführen des Verfahrens nach einem der Ansprüche 1-15 umfasst, wenn das Produkt ausgeführt wird.

**20.** Elektronisch lesbarer Datenträger mit gespeicherten elektronisch lesbaren Steuerungsinformationen, dazu ausgelegt, dass, unter Verwendung des Datenträgers in einer Rechenvorrichtung, die Steuerungsinformationen das Verfahren nach einem der Ansprüche 1-15 durchführen.

**Revendications**

**1.** Procédé d'estimation d'un paramètre de fonctionnement lié à la propulsion d'un véhicule (1) pour un segment de route, le procédé étant réalisé par un dispositif de navigation, le procédé comprenant les étapes suivantes :

- l'estimation d'un paramètre de fonctionnement de véhicule donné pour le segment de route sur la base d'informations fournies pour le segment de route ;
- l'acquisition de données de conduite pour des paramètres de fonctionnement de véhicule alors que le véhicule est en fonctionnement ; l'identification de différentes phases de conduite dans les données de conduite acquises pour les paramètres de fonctionnement du véhicule ;
- pour chacune des phases de conduite : la détermination d'une pluralité de paramètres spécifiques du véhicule sur la base d'un rapport prédéterminé entre les paramètres de fonctionnement de véhicule d'un ensemble respectif de paramètres de fonctionnement de véhicule et en outre sur la base des données de conduite correspondantes, le rapport prédéterminé étant indicatif de la pluralité de paramètres spécifiques du véhicule,
- l'estimation du paramètre de fonctionnement lié à la propulsion pour le segment de route sur la base dudit paramètre de fonctionnement de véhicule donné estimé et la pluralité de paramètres spécifiques du véhicule,

dans lequel le paramètre de fonctionnement lié à la propulsion est au moins une d'une consommation de carburant, d'une consommation d'énergie ou d'une émission de dioxyde de carbone ($CO_2$),
dans lequel la pluralité de paramètres spécifiques du véhicule est déterminée en utilisant une procédure d'estimation de paramètre statistique ou une procédure d'optimisation de paramètre.

2. Procédé selon la revendication 1, dans lequel ledit paramètre de fonctionnement de véhicule donné pour le segment de route est estimé en fonction du temps ou de la distance avec des valeurs de fonction variables sur le segment de route.

3. Procédé selon la revendication 1 ou 2, dans lequel ledit paramètre de fonctionnement de véhicule donné est au moins une d'une vitesse du véhicule (1) estimée pour le segment de route ou d'une accélération du véhicule (1) estimée pour le segment de route.

4. Procédé selon l'une quelconque des revendications précédentes, dans lequel les informations fournies pour le segment de route comprennent au moins un d'un type de segment de route, d'une classe de segment de route, d'une vitesse maximum permise pour le segment de route, d'une vitesse moyenne déterminée pour le type de segment de route, d'une vitesse cible pour le segment de route, d'un paramètre de forme pour le segment de route, d'une pente du segment de route ou des informations de trafic actuel (205) pour le segment de route.

5. Procédé selon l'une quelconque des revendications précédentes, dans lequel l'estimation dudit paramètre de fonctionnement de véhicule donné est en outre basée sur un comportement de conduite (203) déterminé pour un conducteur du véhicule (1).

6. Procédé selon l'une quelconque des revendications précédentes, dans lequel un rapport prédéterminé entre des paramètres de fonctionnement de véhicule prédéterminé est fourni pour chacun des multiples modèles de sous-système de véhicule (202), et dans lequel au moins un paramètre spécifique de véhicule est déterminé pour chaque modèle de sous-système sur la base desdits rapports, les paramètres spécifiques du véhicule déterminés étant pris en compte pour estimer le paramètre de fonctionnement lié à la propulsion.

7. Procédé selon la revendication 6, dans lequel les modèles de sous-système de véhicule (202) comprennent au moins un d'un modèle pour un couplage roue au moteur, d'un modèle pour le dérapage pendant le changement de vitesse vers le haut et le bas, d'un modèle pour un couple requis d'un moteur du véhicule, ou d'un modèle pour la marche au ralenti.

8. Procédé selon l'une quelconque des revendications précédentes, dans lequel au moins deux paramètres de fonctionnement de véhicule, pour lesquels des données de conduite sont acquises, sont sélectionnés dans un groupe comprenant la vitesse, l'accélération, la pression de freinage, le couple moteur, la vitesse de rotation de moteur, la vitesse enclenchée, la consommation de carburant, le niveau de remplissage du réservoir de carburant et l'état de conduite.

9. Procédé selon l'une quelconque des revendications précédentes, dans lequel au moins certains de la pluralité de paramètres spécifiques du véhicule sont proportionnels à une propriété spécifique du véhicule sélectionnée dans un groupe comprenant un rapport de transmission, un coefficient de résistance au roulement ($c_R$), un coefficient de résistance aérodynamique ($c_L$), une résistance contre le coefficient d'accélération ($C_B$), un coefficient de résistance au freinage, une fraction de freinage de décélération, un coefficient de vitesse d'actionnement d'embrayage, une consommation de carburant lors de la marche au ralenti, une vitesse de rotation de moteur lors de la marche au ralenti, une résistance à la montée et une efficience d'un moteur du véhicule.

10. Procédé selon l'une quelconque des revendications précédentes, dans lequel les phases de conduite comprennent au moins une d'une phase de marche au ralenti, d'une phase d'accélération, d'une phase de conduite constante, d'une phase de conduite planaire, d'une conduite avec une phase de décélération, ou d'une conduite avec une phase de freinage appliquée.

**11.** Procédé selon l'une quelconque des revendications précédentes, dans lequel l'estimation du paramètre de fonctionnement lié à la propulsion comprend les étapes suivantes :

- l'estimation d'une vitesse de rotation d'un moteur du véhicule pour le segment de route sur la base dudit paramètre de fonctionnement de véhicule donné, d'un premier de la pluralité de paramètres spécifiques du véhicule et d'un rapport correspondant,
- l'estimation d'un couple à produire par le moteur du véhicule pour le segment de route sur la base dudit paramètre de fonctionnement donné, d'au moins un deuxième de la pluralité de paramètres spécifiques du véhicule et d'un rapport correspondant et
- l'estimation du paramètre de fonctionnement lié à la propulsion pour le segment de route à partir de la vitesse de rotation de moteur estimé, du couple moteur estimé, d'au moins un troisième de la pluralité de paramètres spécifiques du véhicule et d'un rapport correspondant.

**12.** Procédé selon l'une quelconque des revendications précédentes, dans lequel ledit paramètre de fonctionnement de véhicule donné est la vitesse du véhicule et dans lequel l'estimation du paramètre de fonctionnement lié à la propulsion comprend les étapes suivantes :

- l'estimation d'une somme de résistances à la conduite du véhicule pour le segment de route sur la base de ladite vitesse, d'au moins un premier de la pluralité de paramètres spécifiques du véhicule et d'un rapport correspondant, et
- l'estimation du paramètre de fonctionnement lié à la propulsion pour le segment de route à partir de la vitesse estimée, des résistances à la conduite estimées, d'au moins un deuxième de la pluralité de paramètres spécifiques du véhicule et d'un rapport correspondant.

**13.** Procédé selon l'une quelconque des revendications précédentes, comprenant en outre l'étape d'attribution d'une valeur de coût correspondant au paramètre de fonctionnement lié à la propulsion estimé au segment de route ou à une classe ou à un type du segment de route, la valeur de coût étant fournie pour un autre calcul de route.

**14.** Procédé de calcul d'une route dans un système de navigation de véhicule comprenant les étapes suivantes :

- la récupération de segments de route à partir d'une base de données du système de navigation, les segments de route étant associés aux valeurs de coût correspondant à un paramètre de fonctionnement lié à la propulsion déterminé selon le procédé selon l'une des revendications 1 à 13, les valeurs de coût étant associées aux segments de route individuels ou à différents types ou classes de segments de route,
- la détermination d'une route depuis un point de départ à une destination en tenant compte des valeurs de coût correspondant au paramètre de fonctionnement lié à la propulsion.

**15.** Procédé de calcul d'une route dans un système de navigation de véhicule, comprenant les étapes suivantes :

- la réception des informations de trafic actuel pour des segments de route prédéterminés ;
- la réalisation d'une estimation d'un paramètre de fonctionnement lié à la propulsion pour les segments de route prédéterminés selon l'une des revendications 1 à 13, l'estimation tenant compte des informations de trafic actuel ; et
- la détermination d'une route vers une destination en tenant compte de coûts correspondants au paramètre de fonctionnement lié à la propulsion estimé pour les segments de route prédéterminés.

**16.** Système de navigation pour un véhicule comprenant :

- une unité d'interface (26) fournissant une interface à un système de capteur de véhicule (1 à 14),
- une unité de traitement (21) adaptée pour estimer un paramètre de fonctionnement lié à la propulsion du véhicule pour un segment de route par estimation d'un paramètre de fonctionnement de véhicule donné pour le segment de route sur la base des informations fournies pour le segment de route et estimation du paramètre de fonctionnement lié à la propulsion pour le segment de route sur la base dudit paramètre de fonctionnement de véhicule donné estimé, l'estimation tenant compte d'une pluralité de paramètre spécifique du véhicule, **caractérisé en ce que** l'unité de traitement (21) est en outre adaptée pour déterminer la pluralité de paramètres spécifiques du véhicule par
- l'acquisition de données de conduite pour des paramètres de fonctionnement de véhicule par le biais de ladite unité d'interface alors que le véhicule (1) est en fonctionnement ;

- l'identification de différentes phases de conduite dans les données de conduite acquises pour les paramètres de fonctionnement de véhicule ;
- pour chacune des phases de conduite : la détermination de la pluralité de paramètres spécifiques du véhicule sur la base d'un rapport prédéterminé entre les paramètres de fonctionnement de véhicule d'un ensemble respectif de paramètres de fonctionnement de véhicule et en outre sur la base de données de conduite correspondantes, le rapport prédéterminé étant indicatif de la pluralité de paramètres spécifiques du véhicule,

dans lequel le paramètre de fonctionnement lié à la propulsion est au moins une consommation de carburant, une consommation d'énergie ou une émission de dioxyde de carbone ($CO_2$),

dans lequel la pluralité de paramètres spécifiques du véhicule est déterminée en utilisant une procédure d'estimation de paramètre statistique ou une procédure d'optimisation de paramètre.

17. Système de navigation selon la revendication 16, comprenant en outre une base de données (22) adaptée pour enregistrer la pluralité de paramètres spécifiques du véhicule déterminés par l'unité de traitement.

18. Système de navigation selon la revendication 16 ou 17, dans lequel l'unité de traitement est adaptée pour réaliser le procédé selon l'une des revendications 1 à 15.

19. Produit de programme informatique qui peut être chargé dans la mémoire interne d'un dispositif informatique, ledit produit comprenant des parties de code logiciel pour la réalisation du procédé selon l'une des revendications 1 à 15 lorsque le produit est exécuté.

20. Support de données lisible électroniquement avec des informations de commande lisibles électroniquement enregistrées configurées de sorte que lors de l'utilisation du support de données dans un dispositif informatique, les informations de commande réalisent le procédé selon l'une des revendications 1 à 15.

**FIG. 1**

201 — DRIVING DATA, FROM CAN

202 — MODELS FOR VEHICLE SUBSYSTEMS

203 — DRIVER MODEL

205 — TRAFFIC DATA; TEST DRIVE DATA

206 — MAP DATA

207 — ROAD/STREET MODEL

204 — ESTIMATION OF VELOCITY/ACCELERATION PROFILE

208 — ESTIMATION OF OPERATING PARAMETER; COST DETERMINATION

209 — ROUTE DETERMINATION

20

**Fig. 2**

FIG. 3

EP 2 221 581 B1

START

START DRIVING — 301

READ DRIVING DATA FOR VEHICLE
OPERATING PARAMETERS FROM CAN
BUS — 302

IDENTIFY DRIVING PHASES IN DRIVING
DATA — 303

PROVIDE RELATIONSHIPS BETWEEN
OPERATING PARAMETERS
FOR VEHICLE SUBSYSTEMS — 304

DETERMINE VEHICLE SPECIFIC
PARAMETER(S) FOR DRIVING PHASES — 305

STORE VEHICLE SPECIFIC
PARAMETERS/PROVIDE VEHICLE SPECIFIC
PARAMETERS FOR FURTHER USE — 306

END

**FIG. 4**

START

RETRIEVE MAP DATA — 401

RETRIEVE INFORMATION ON
DRIVER OF VEHICLE — 402

RETRIEVE TRAFFIC INFORMATION — 403

RETRIEVE VEHICLE SPECIFIC PARAMETERS — 404

RETRIEVE RELATIONSHIPS BETWEEN VEHICLE
OPERATING PARAMETERS — 405

ESTIMATE VEHICLE VELOCITY/
ACCELERATION FOR ROAD SEGMENT — 406

ESTIMATE MOTOR TORQUE REQUIRED ON
ROAD SEGMENT FROM VELOCITIY/ ACCELERATION — 407

ESTIMATE MOTOR ROTATIONAL SPEED ON ROAD
SEGMENT FROM VELOCITIY/ ACCELERATION — 408

ESTIMATE FUEL CONSUMPTION/ENERGY
CONSUMPTION/$CO_2$ EMISSION FOR ROAD SEGMENT — 409

STORE ESTIMATED VALUE(S) — 410

ASSIGN CORRESPONDING COSTS VALUE — 411

STORE ASSIGNED COST VALUE — 412

END

FIG. 5

```
              ┌─────────────┐
              │    START    │
              └──────┬──────┘
                     ▼
        ┌──────────────────────────┐ ── 500
        │ DETERMINE VEHICLE POSITION │
        └────────────┬─────────────┘
                     ▼
        ┌──────────────────────────┐ ── 501
        │     RETRIEVE MAP DATA     │
        └────────────┬─────────────┘
                     ▼
        ┌──────────────────────────┐ ── 502
        │    RECEIVE DESTINATION    │
        └────────────┬─────────────┘
                     ▼
        ┌──────────────────────────┐ ── 503
        │  RETRIEVE CURRENT DRIVER/ │
        │    TRAFFIC INFORMATION    │
        └────────────┬─────────────┘
                     ▼
        ┌──────────────────────────┐ ── 504
        │   DETERMINE PROPULSION    │
        │    RELATED OPERATING      │
        │ PARAMETER AND COST VALUE  │
        └────────────┬─────────────┘
                     ▼
        ┌──────────────────────────┐ ── 505
        │    DETERMINE ROUTE TO     │
        │ DESTINATION WHICH MINIMIZES │
        │     ASSOCIATED COSTS      │
        └────────────┬─────────────┘
                     ▼
        ┌──────────────────────────┐ ── 506
        │    START ROUTE GUIDANCE   │
        └────────────┬─────────────┘
                     ▼
              ┌─────────────┐
              │     END     │
              └─────────────┘
```

**FIG. 6**

FIG. 7

FIG. 8

FIG. 9

**EP 2 221 581 B1**

**Patent documents cited in the description**

- US 20070112475 A1